# EUROPEAN PATENT SPECIFICATION

(11) **EP 3 101 384 B1**
(45) Date of publication and mention of the grant of the patent: **03.01.2018**
(21) Application number: 15380021.4
(22) Date of filing: 01.06.2015
(51) Int. Cl.: G01B 21/04, G05B 19/401

(54) **CALIBRATION METHOD FOR CALIBRATING THE DRIVE AXIS OF A MACHINE TOOL**
KALIBRIERUNGSVERFAHREN ZUR KALIBRIERUNG DER ANTRIEBSACHSE EINER WERKZEUGMASCHINE
PROCÉDÉ D'ÉTALONNAGE POUR ÉTALONNER L'AXE D'ENTRAÎNEMENT D'UNE MACHINE-OUTIL

(43) Date of publication of application: 07.12.2016
(73) Proprietor: Ideko, S.Coop., 20870 Elgoibar Guipuzcoa (ES)
(72) Inventor: Aitor Pérez de Nanclares, Fernández, 01008 Vitoria (ES); Gorka Aguirre, Rejado, 01010 Vitoria (ES); Harkaitz Urreta, Prieto, 48269 Mallabia (ES)
(74) Representative: Cabinet Plasseraud

(56) References cited:
- EP-A1- 1 491 287
- TRAPET E ET AL: "Self-centering probes with parallel kinematics to verify machine-tools", PRECISION ENGINEERING, ELSEVIER, AMSTERDAM, NL, vol. 30, no. 2, 1 April 2006 (2006-04-01), pages 165-179, XP027949840, ISSN: 0141-6359 [retrieved on 2006-04-01]
- JUAN J AGUILAR ET AL: "A NEW CALIBRATION SYSTEM FOR SELF-CENTRING PROBES AND ANALOG PROBES MOUNTING OPTO-ELECTRONICAL SENSORS", ASPE PROCEEDINGS 2005 - MACHINE TOOL METROLOGY, 14 October 2005 (2005-10-14), pages 1-4, XP055212110,

## Description

### Field of the Art

The present invention relates to the calibration of drive axes of a machine tool, proposing a method that allows performing calibration in a rapid and simple manner by using the information provided by the encoders associated with the actual drive axes of the machine tool, as well as the information provided by a measuring gauge which is arranged in the head of the machine tool and configured for referencing the center of precision spheres which are arranged in the work area of the machine.

### State of the Art

Calibrating machine tools is a process required for optimizing production processes in industries. Different measurement systems are known today for calibrating drive axes of a machine tool which are based on using precision spheres. In these systems, a measuring gauge is arranged in the head of the machine tool, whereas a set of precision spheres is arranged in the work area of the machine. With this arrangement, the head of the machine travels along the spheres while the measuring gauge references the center of each of said spheres, to enable calibrating the drive axes of the machine tool with this information.

Within such measurement systems, touch probes are the measuring gauges most widely used in the industry. The touch probe is arranged in the head of the machine and by means of a series of manual or programmed movements, the touch probe moves closer until contacting with the precision sphere. Contact between the touch probe and the sphere causes the touch probe to leave its equilibrium position, at which time the touch probe sends a signal to the machine tool control, the coordinates of the point of contact between the touch probe and the sphere according to the position in which the head is located within the work area of the machine being recorded. The position of the head can be obtained from a measurement system incorporated in the machine tool, such as encoders of the machine, for example.

The coordinates (x, y, z) of the point of contact in the surface of the sphere are acquired with such measurement; nevertheless, for establishing correct calibration of the drive axes of the machine, it is not enough to reference a point of the surface of the sphere, but rather it is necessary to reference its center, so at least three, and generally more than three, points of the surface of the sphere must be measured. That information about the different points of the surface of the sphere must subsequently be processed to obtain the coordinates of the center of the sphere. This entire referencing process renders the calibration of the drive axes of the machine slow and tedious.

On the other hand, the high-accuracy measuring gauges based on three orthogonal displacement sensors which are arranged in the head of the machine tool are known. In calibration using such high-accuracy measuring gauges, the machine tool control sends an order to move the head carrying the measuring gauge towards the nominal coordinates in which the precision sphere is estimated to be located, such that when said nominal coordinates are reached, the measuring gauge records the actual distance between the precision sphere and each of the three displacement sensors. Subsequently, by means of a mathematical model the distances measured by the displacement sensors are converted into a difference between the nominal coordinates in which the sphere was estimated to be located and its actual coordinates, in directions of drive axes of the machine, such that calibration of the drive axes of the machine can be performed with said difference.

Due to their high positioning accuracy, such measuring gauges are able to perform referencing of the center of a precision sphere in a rapid and accurate manner, without requiring communication between the measuring gauge and the machine tool control, since the value of the measurement of the center of the precision sphere is obtained from the three displacement sensors of the measuring gauge; however, the high cost of such high-accuracy measuring gauges is a limiting factor for their industrial application. Article by Trapet E. et al, "Self-centering probes with parallel kinematics to verify machine-tools" is related to a self-centering probe to verify the performance of machine-tools using ball artifacts.

An alternative system for calibrating drive axes of the machine tool, which allows performing calibration in a rapid and simple manner and by using low-cost instruments is therefore needed.

### Object of the Invention

The present invention proposes a calibration method according to claim 1. With this calibration method, it is not necessary to use high-accuracy measuring gauges like in the solutions of the state of the art, but rather measuring gauges based on three, low-cost orthogonal sensors with lower accuracy but good repeatability can be used, such as limit switch probes, for example, since the proposed method uses the measurement system of the machine tool to determine the spatial location of the measuring gauge in the work area of the machine. Therefore, while the method of the state of the art requires the measurement system to be accuracy and repetitive in the measurement of the distance to the precision sphere, the method proposed by the invention only requires the measurement to be repetitive.

According to the foregoing, there is obtained a high-accuracy calibration method for calibrating the drive axes of a machine tool, which does not require using a high-accuracy measuring gauge, and said method can be carried out by using low-cost measuring gauges since accuracy in the positioning of the shafts is achieved by using the measurement system incorporated in the machine tool.

### Description of the Drawings

Figure 1 shows a schematic view of a milling-type machine tool by means of which the calibration method of the invention is carried out.
Figures 2 and 3 show a diagram of the response function of one of the linear displacement sensors of the measuring gauge whereby the center of a precision sphere is determined.

### Detailed Description of the Invention

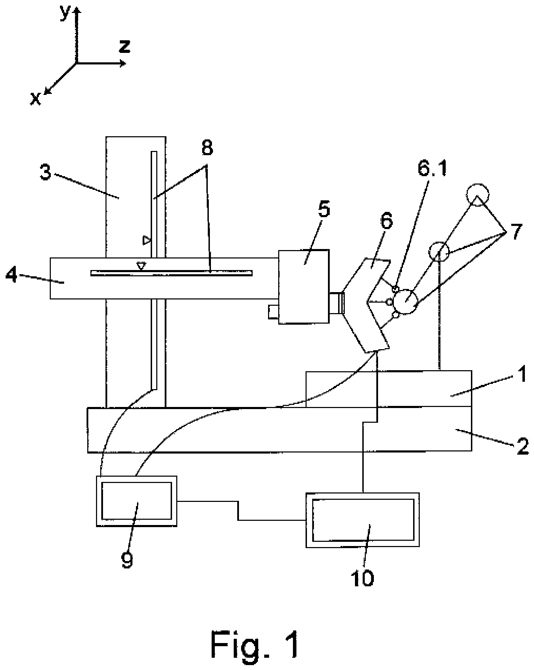

Figure 1 shows an embodiment of a milling-type machine tool the drive axes of which can be calibrated by means of the method of the present invention. The machine tool comprises a work bench (1), a frame (2) on which a column (3) and the work bench (1) is arranged, a ram (4) which is mounted in the column (3), and a head (5) which is mounted in the ram (4) and which at the end thereof incorporates a measuring gauge (6) configured for detecting the center of precision spheres (7) which are arranged over the work bench (1). To enable carrying out accurate calibration, the precision spheres (7) used must be very hard and have a polished spherical surface with low roughness and a low roundness error.

The machine tool is provided with at least three linear drive axes represented by "x, y, z" axes. By means of these drive axes, the column (3) moves horizontally on the frame (2) along the "x" axis, and the ram (4) moves vertically with respect to the column (3) along the "y" axis, and horizontally along the "z" axis. In a non-limiting manner, the drive axes can be ball screws, rack and pinion gears, linear motors, or other similar drive systems commonly used in the machine tool sector.

The drive axes of the machine tool are controlled by means of the measurement system of the actual machine, which, as shown in Figure 1, is made up of encoders (8), one for each drive axis of the machine, such that the relative movement of the column (3) and the ram (4) with respect to the work bench (1) is controlled by means of said encoders (8), therefore being able to determine at all times the spatial location of the head (5) in the work area of the machine by means of the position readings provided by said encoders (8) (only the encoders (8) associated with the "z" and "y" axes are depicted in the view shown in Figure 1).

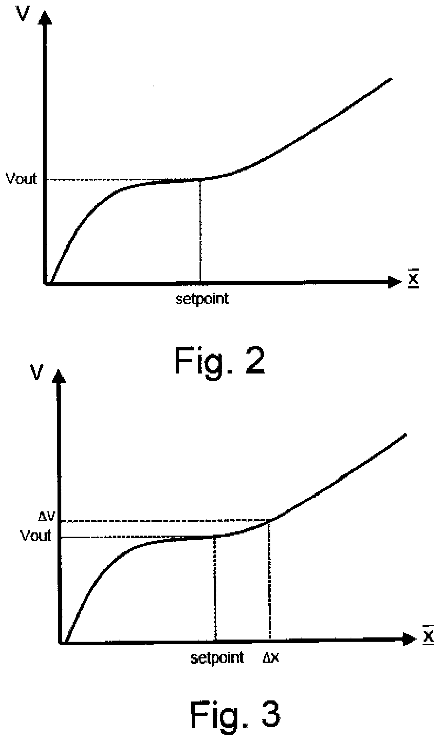

The measuring gauge (6) which is arranged in the head (5) consists of three linear displacement sensors (6.1) arranged orthogonal to one another and used to determine the center of a precision sphere (7). The linear displacement sensors (6.1) are low-cost sensors, such as limit switch probes, for example, which give an output voltage signal which is a function of the distance at which they are located from the precision sphere (7). Figure 2 shows the response function of one of the linear displacement sensors (6.1) of the measuring gauge (6), wherein the output voltage values are represented on the y-axis of the function, and the distance values are represented on the x-axis. The three linear displacement sensors (6.1) of the measuring gauge (6) are configured according to a setpoint distance which corresponds with a reference output voltage (Vout). Therefore, when the three linear displacement sensors (6.1) provide the same reference output voltage (Vout), it means that the measuring gauge (6) has determined the center of the precision sphere (7), three linear displacement sensors (6.1) being located at the same distance from the center of the precision sphere (7).

The machine tool has a control unit (9), which has been envisaged to be a computer numerical control CNC of the machine, as well as a controller (10) of the measuring gauge (6) provided with a data acquisition card. The controller (10) is configured for receiving the voltage values of the linear displacement sensors (6.1) of the measuring gauge (6), whereas the control unit (9) is responsible for controlling the drive axes of the machine and receiving the position readings of the encoders (8). As shown in Figure 1, the controller (10) is communicated with the machine control unit (9) for receiving the information of the reading of the linear displacement sensors (6.1); nevertheless the controller (10) could be directly integrated in the control unit, the computer numerical control CNC of the machine therefore being that which processes all the information

Figure 1 depicts the measuring gauge (6) arranged in the head (5) of the machine tool and the precision spheres (7) arranged over the work bench (1), although an opposition arrangement could be used, in which the head (5) incorporates a precision sphere (7) and one or several measuring gauges (6), each provided with three linear displacement sensors (6.1), were arranged over the work bench (1).

With this arrangement of the machine, the invention allows determining errors in the positioning of the drive axes of the machine based on the position information given by the encoders (8) and the measuring gauge (6) which is mounted in the head (5) of the machine. The calibration method of the invention comprises the following steps:

### Step A:

The measuring gauge (6) which is provided with the three linear displacement sensors (6.1) is arranged on the head (5) of the machine. The three linear displacement sensors (6.1) are arranged orthogonal to one another in order to enable determining the center of the precision sphere (7).

### Step B:

At least one precision sphere (7) the center of which must be determined for detecting the positioning error of the drive axes of the machine is arranged over the work bench (1).

### Step C:

The estimated position of the drive axes of the machine according to an estimated reference position in which the center of the precision sphere (7) which is arranged over the work bench (1) is expected to be located is entered in the machine control unit (9); i.e., the spatial position in which the center of the precision sphere (7) according to coordinates (x, y, z) of the drive axes of machine is estimated to be located is coded in the computer numerical control CNC of the machine.

### Step D:

The control unit (9) sends an order to the drive axes of the machine to move the head (5) carrying the measuring gauge (6) to the estimated reference position, determined in step C, in which the center of the precision sphere (7) has been estimated to be located.

### Step E:

when the head (5) reaches the estimated reference position in which the center of the precision sphere (7) is expected to be located, the three linear displacement sensors (6.1) of the measuring gauge (6) are arranged over the precision sphere (7). At that point, the method starts to execute an algorithm iteratively whereby the drive axes of the machine are controlled until the three linear displacement sensors (6.1) of the measuring gauge (6) suitably reference the center of the precision sphere (7).

Therefore, once the linear displacement sensors (6.1) of the measuring gauge (6) are positioned over the precision sphere (7), as indicated in step D, each of the linear displacement sensors (6.1) sends a voltage signal to the data acquisition card of the controller (10), said voltage signal corresponding with a value indicating the distance from the linear displacement sensor (6.1) to the center of the sphere, as observed in the response function of the sensors (6.1) of Figure 2.

The measuring gauge (6) has previously been calibrated for detecting the center of a precision sphere (7) when the condition that the three linear displacement sensors (6.1) of the measuring gauge (6) provide one and the same reference output voltage (Vout) corresponding with a setpoint distance is met, i.e., the measuring gauge (6) has previously been calibrated to determine the center of the precision sphere (7) when the three linear displacement sensors (6.1) are located at the same distance from the center of the precision sphere (7).

When this condition is not met, the drive axes of the machine are acted on in order to move the head (5) until the condition is met. Specifically, as observed in Figure 3, when the linear displacement sensors (6.1) detect a difference in distance (Δx) with respect to the setpoint distance, they send to controller (10) an output voltage different from the reference output voltage (Vout), that difference in output voltage (ΔV) is processed by the controller (10) and converted into a movement in coordinates (x, y, z) of the drive axes of machine. According to this, the drive axes of the machine are controlled for moving the head (5) and reducing that difference in output voltage (ΔV).

This process is performed iteratively by making small movements of the head (5) by means of the drive axes of the machine until the three linear displacement sensors (6.1) send to the controller (10) the reference output voltage (Vout) that corresponds with the setpoint distance.

### Step F:

When the three linear displacement sensors (6.1) of the measuring gauge (6) have referenced the center of the precision sphere (7), the actual position of the drive axes of the machine is recorded according to the reading taken by the encoders (8).

### Step G:

Finally, the actual position of the drive axes of the machine taken by the encoders (8) in step F is compared with the estimated position of the drive axes established in step C in order to calculate the positioning error of the drive axes according to said difference.

The calibration method is applicable to machine tools having three, four or five drive axes, i.e., the three linear drive axes represented by the "x, y, z" axes, and two drive angular shafts of the work bench (1).

The method allows volumetric calibration of machines having three linear drive axes. To that end, a calibrated pattern of precision spheres (7) is used. The pattern contains a number of precision spheres (7) in which the spheres are aligned with one another, and the distance between them is known since it has been previously calibrated. The pattern of precision spheres (7) is placed over the work bench (1) in different orientations covering the work area to be calibrated.

For each orientation, the coordinates of the centers of all the precision spheres (7) are measured by using the method described in steps A to G. To accelerate the measurement, the two precision spheres (7) of the ends of the pattern are measured by placing the head (5) of the machine with controlled movements in manual mode and by bringing the measuring gauge (6) closer to the corresponding precision sphere (7) until putting the three linear displacement sensors (6.1) in range.

Once the coordinates of the two precision spheres (7) of the ends are known, and since the precision spheres (7) of the pattern are aligned with one another, the estimated reference position of the remaining precision spheres (7) of the pattern is determined as described in step C. Therefore, the head (5) of the machine moves sequentially until positioning the measuring gauge (6) over each of the precision sphere (7) of the pattern, and steps D to G of the method are repeated for each of said spheres. The actual coordinates of the center of each precision sphere (7) of the pattern are thereby obtained, and the parametric errors of the linear drive axes of the machine (positioning, straightness, angular errors, perpendicularities) can be extracted with all that information.

The method of the invention also allows performing complete calibration of machines including at least one rotating drive axis of the work bench (1), or of the head (5). To that end, after having performed the calibration of the three linear drive axes and having compensated for their errors, the rotational drive axes of the work bench, or of the head (5), are calibrated by following the same method, based on referencing the center of the precision sphere (7), as the method described in steps A to G for linear drive axes. In this case, measurements are taken with respect to a single precision sphere (7), and the measurement of the position error thereof is taken for a series of positions of the rotating drive axes, such that the linear drive axes move so that the relative position between the precision sphere (7) and the measuring gauge (6) does not change. The error with respect to the estimated reference position of the center of the precision sphere (7) is measured at each position of the rotating drive axes, and this information will be used to extract parametric errors of the rotating drive axes of the machine (positioning, straightness, angular errors, perpendicularities).

## Claims

1. A calibration method for calibrating the shafts of a machine tool, used to determine positioning errors of the drive axes of the machine, comprising a work bench (1), a head (5) and encoders (8) configured for determining the position of the drive axes, the method comprises the steps of:
A. arranging in the head (5) a measuring gauge (6) provided with three linear displacement sensors (6.1) which are arranged orthogonal to one another,
B. arranging in the work bench (1) at least one precision sphere (7),
C. establishing an estimated reference position of the center of the precision sphere (7) according to an estimated position of the drive axes of the machine,
D. moving the head (5) until positioning the measuring gauge (6) over the precision sphere (7) according to the estimated reference position established in step C, **characterized in that** the method further comprises the steps of:
E. iteratively controlling the drive axes of the machine based on the information provided by the three linear displacement sensors (6.1) of the measuring gauge (6) until they are located at the same distance from the center of the precision sphere (7),
F. recording the actual position of the drive axes of the machine by means of the encoders (8),
G. comparing the actual position of the drive axes recorded in step F with the estimated position of the drive axes established in step C in order to determine the positioning error of the drive axes according to said difference.

2. The calibration method for calibrating the shafts of a machine tool according to the claim 1, **characterized in that** the method is used for the volumetric calibration of machines having three linear drive axes, wherein in step B a pattern of precision spheres (7) aligned with one another is arranged over the work bench (1), and steps C to G of the method are repeated for each of the precision spheres (7) of the pattern.

3. The calibration method for calibrating the shafts of a machine tool according to the claim 1, **characterized in that** the method is additionally used for calibrating at least one rotating drive axis of the work bench (1) or of the head (5).

## Patentansprüche

1. Kalibrierungsverfahren zum Kalibrieren der Wellen eines Maschinenwerkzeugs, das verwendet wird, um Positionierungsfehler der Antriebsachsen der Maschine zu bestimmen, umfassend eine Arbeitsbank (1), einen Kopf (5) und Codierer (8), die konfiguriert sind, um die Position der Antriebsachsen zu bestimmen, wobei das Verfahren die folgenden Schritte umfasst:
A. Anordnen im Kopf (5) eines Messgeräts (6), das mit drei linearen Verschiebungssensoren (6.1) ausgestattet ist, die orthogonal zueinander angeordnet sind,
B. Anordnen in der Arbeitsbank (1) mindestens eines Präzisionsbereichs (7),
C. Festsetzen einer geschätzten Referenzposition des Zentrums des Präzisionsbereichs (7) gemäß einer geschätzten Position der Antriebsachsen der Maschine,
D. Bewegen des Kopfs (5) bis zur Positionierung des Messgeräts (6) über dem Präzisionsbereich (7) gemäß der geschätzten Referenzposition, die in Schritt C festgesetzt wurde,
**dadurch gekennzeichnet, dass** das Verfahren ferner die folgenden Schritte umfasst:
E. iteratives Steuern der Antriebsachsen der Maschine auf der Grundlage der Information, die von den drei linearen Verschiebungssensoren (6.1) des Messgeräts (6) bereitgestellt wurde, bis sie sich im gleichen Abstand vom Zentrum des Präzisionsbereichs (7) befinden,
F. Aufzeichnen der gegenwärtigen Position der Antriebsachsen der Maschine mit Hilfe der Codierer (8),
G. Vergleichen der gegenwärtigen Position der Antriebsachsen, die in Schritt F aufgezeichnet wurde, mit der geschätzten Position der Antriebsachsen, die in Schritt C festgesetzt wurde, um den Positionierungsfehler der Antriebsachsen gemäß der Differenz zu bestimmen.

2. Kalibrierungsverfahren zum Kalibrieren der Wellen eines Maschinenwerkzeugs nach Anspruch 1, **dadurch gekennzeichnet, dass** das Verfahren für die volumetrische Kalibrierung von Maschinen verwendet wird, die drei lineare Antriebsachsen aufweisen, wobei in Schritt B ein Muster von Präzisionsbereichen (7), die miteinander ausgefluchtet sind, über der Arbeitsbank (1) angeordnet ist, und die Schritte C bis G des Verfahrens für jeden der Präzisionsbereiche (7) des Musters wiederholt werden.

3. Kalibrierungsverfahren zum Kalibrieren der Wellen eines Maschinenwerkzeugs nach Anspruch 1, **dadurch gekennzeichnet, dass** das Verfahren außerdem verwendet wird, um mindestens eine drehende Antriebsachse der Arbeitsbank (1) oder des Kopfs (5) zu kalibrieren.

## Revendications

1. Procédé d'étalonnage pour étalonner les arbres d'une machine-outil, utilisé pour déterminer les erreurs de positionnement des axes d'entraînement de la machine, comprenant un banc de travail (1), une tête (5) et des codeurs (8) configurés pour déterminer la position des axes d'entraînement, le procédé comprend les étapes de :
A. agencement dans la tête (5) d'une jauge de mesure (6) dotée de trois capteurs de déplacement linéaire (6.1) qui sont agencés orthogonalement les uns par rapport aux autres,
B. agencement dans le banc de travail (1) d'au moins une sphère de précision (7),
C. établissement d'une position de référence estimée du centre de la sphère de précision (7) en fonction d'une position estimée des axes d'entraînement de la machine,
D. déplacement de la tête (5) jusqu'au positionnement de la jauge de mesure (6) sur la sphère de précision (7) en fonction de la position de référence estimée établie à l'étape C,
**caractérisé en ce que** le procédé comprend en outre les étapes de :
E. commande itérative des axes d'entraînement de la machine sur la base des informations fournies par les trois capteurs de déplacement linéaire (6.1) de la jauge de mesure (6) jusqu'à ce qu'ils soient situés à la même distance du centre de la sphère de précision (7),
F. enregistrement de la position réelle des axes d'entraînement de la machine au moyen des codeurs (8),
G. comparaison de la position réelle des axes d'entraînement enregistrée à l'étape F avec la position estimée des axes d'entraînement établie à l'étape C afin de déterminer l'erreur de positionnement des axes d'entraînement en fonction de ladite différence.

2. Procédé d'étalonnage pour étalonner les arbres d'une machine-outil selon la revendication 1, **caractérisé en ce que** le procédé est utilisé pour l'étalonnage volumétrique de machines ayant trois axes d'entraînement linéaire, dans lequel à l'étape B un motif de sphères de précision (7) alignées les unes avec les autres est agencé sur le banc de travail (1), et les étapes C à G du procédé sont répétées pour chacune des sphères de précision (7) du motif.

3. Procédé d'étalonnage pour étalonner les arbres d'une machine-outil selon la revendication 1, **caractérisé en ce que** le procédé est en outre utilisé pour étalonner au moins un axe d'entraînement rotatif du banc de travail (1) ou de la tête (5).
